Europäisches Patentamt

(19) European Patent Office

Office européen des brevets

(11) Publication number: **0 001 702**
A2

# EUROPEAN PATENT APPLICATION

(21) Application number: **78300495.5**

(22) Date of filing: **12.10.78**

(51) Int. Cl.²: **G 02 B 5/14**
**G 02 B 7/00**

(30) Priority: **25.10.77 US 844869**
**20.12.77 US 862478**

(43) Date of publication of application:
**02.05.79 Bulletin 79/9**

(84) Designated contracting states:
**BE DE FR GB NL SE**

(71) Applicant: **AMP INCORPORATED**
**Eisenhower Boulevard**
**Harrisburg, Pennsylvania(US)**

(72) Inventor: **Harwood, Robert George**
**130 Holly Drive**
**Mechanicsburg Pennsylvania(US)**

(72) Inventor: **Bowen, Terry Patrick**
**York Hill Drive**
**Etters Pennsylvania(US)**

(72) Inventor: **Schumacher, William Ludlow**
**353 Blacksmith Road**
**Camp Hill Pennsylvania(US)**

(74) Representative: **Stuart-Prince, Richard Geoffrey et al,**
**20 Queensmere**
**Slough, Berkshire SL1 1YZ(GB)**

(54) Optical fibre connector assembly.

(57) An optical fibre core (21,67) stripped of its irregularly dimensioned optical cladding (23) is inserted in a precisely dimensioned passageway (19,28,66) of a housing part (18,27,64) which has a refractive index compatible with the refractive index of the optical cladding (23) ensuring both precise location and retention of the optical properties of the fibre end portion. A portion of the passageway (19,66) between the fibre end portion (21,67) and an end of the housing part (18,27,64) is filled with adhesive (24) having a refractive index compatible with that of the fibre core (21,67).

FIG.1.

## Optical Fibre Connector Assembly

The invention relates to optical fibre connector assemblies.

It is important when terminating optical fibres in connectors precisely to locate the fibre core for optical link with another fibre core with minimum axial misalignment and therefore minimum transmission losses at the fibre interface.

Known optical fibres comprise a plastics or glass core surrounded by an optical cladding having a refractive index less in value than the refraction index of the core for transmission of light along the fibre core by total internal reflection.

However, the optical cladding is frequently not uniformly dimensioned or concentric producing axial misalignment between optically linked fibres. Removal of the cladding affects adversely the optical properties of the fibre. For example the cladding may vary in thickness from one to six thousandths of an inch with a core diameter of six thousandths of an inch.

According to the invention, an optical fibre connector assembly comprising an optical fibre enclosed in a housing passageway is characterised in that an end portion of the optical fibre core from which the optical cladding has been stripped is in contact with a portion of housing material defining the passageway having a refractive index of value less than the refractive index of the core. Preferably, the said housing portion has a refractive index of value substantially equal to that of the optical cladding.

This enables the precisely dimensioned fibre core to be engaged directly by the passageway walls avoiding errors in alignment produced by engagement with the irregularly dimensioned optical cladding whilst assisting in maintaining the optical properties of the optical fibre.

Preferably, the optical fibre core is secured in the housing by an adhesive having a refraction index of less or equal value to the refractive index of the core, further assisting in maintaining the optical continuity of the fibre.

Examples of optical connector assemblies according to the invention will now be described with reference to the accompanying drawings in which:

Figure 1 is a longitudinal cross-sectional view of a first example of connector assembly according to the invention;

Figure 2 is a longitudinal cross-sectional view of a second example of connector assembly according to the invention;

Figure 3 is a side view partly in cross-section of a pair of connector assemblies according to the invention linked together;   and,

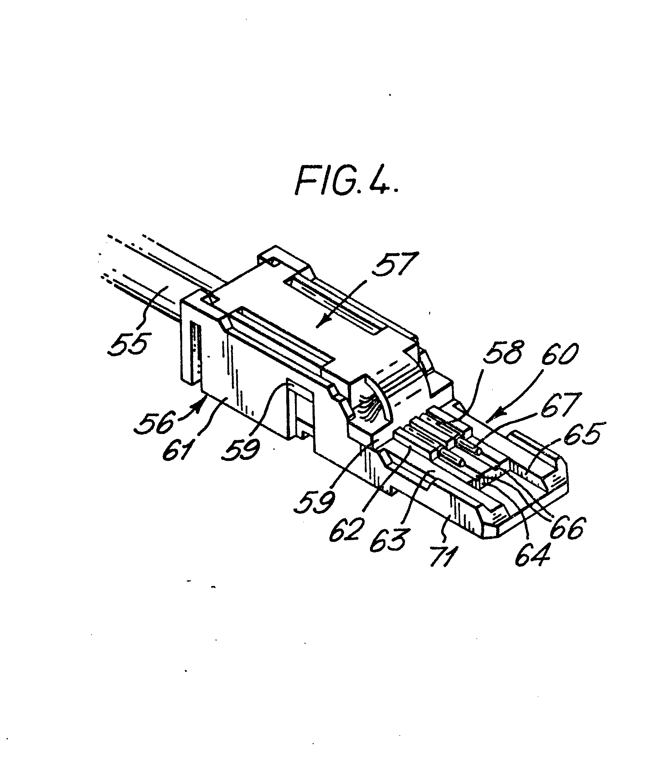

Figure 4 is a perspective view of a third example of connector assembly according to the invention.

The first example of optical fibre connector assembly comprises an optical fibre cable 11 terminated in a housing 12.   The housing includes a ferrule portion 13, similar to that described in US Patent No. 3,999,837, and moulded from plastics material with an axially extending passageway 14 including a first section 15 of relatively small diameter communicating via a frusto conical section 16 with a second section 17 of relatively large diameter.   The housing also includes an insert 18 in the first section which insert has a precisely centred passageway 19 receiving an end 21 of the optical fibre cable 11, which end is stripped of the optical cladding 23.    The tubular portion is made from an optical plastics such as silicone rubber having the same refractive index as the refractive index of the optical cladding 23 which may be made of the same material.    The frusto conical section 16 of the passageway is filled with an adhesive 24 preferably having the same refractive index as that of the fibre core which may, for example, be made of fused silica. The passageway section 17 receives a sheath 25 of the optical fibre as a close fit.

To terminate the optical fibre 11, the sheath and irregular optical cladding are stripped from the optical fibre end which is secured by the adhesive in the passageway 19.    As the insert material has a refractive index equal to that of the optical cladding, the optical properties of the fibre are maintained at the fibre end while removal of the cladding enables the fibre core to be centred precisely in the ferrule.

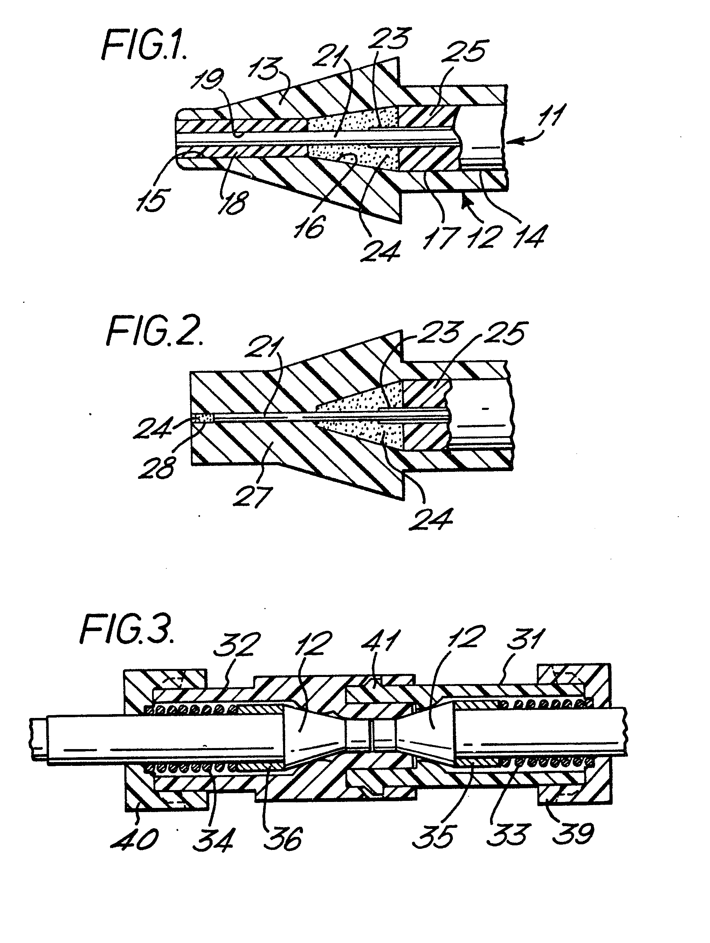

In the second example, shown in Figure 2, the entire ferrule 27 is made from material with a refractive index equal to that of the cladding 23 so that there is no requirement for an insert.    In this example, the fibre core 21 need only be located in an approximate axial position in the ferrule passageway 28 and adhesive having the same refractive index as that of the fibre core inserted into the passageway between the end of the fibre core and the mating end of the ferrule.    The mating end can then be optical polished to the desired length and the mating ends of two ferrules abutted without the fibres making direct physical contact thereby avoiding chipping or cracking each other with a resulting change in optical characteristics.

By selecting the refractive indexes of the ferrule and/or insert and adhesive, the numerical apertures of mating connector assemblies can be altered.   For example a large numerical aperture can be selected for the receiving fibre end and a small aperture for the transmitting fibre end with high light coupling efficiency. The shape of the aperture may also be altered to match that of a light source e.g. a long, rectangular source from an edge emitter could be efficiently received by a fibre in an appropriately constructed ferrule.

Two connector assemblies can be optically coupled together as shown in Figure 3.   The coupling comprises male and female receptacles 31 and 32 each receiving a housing 12 biased adjacent in alignment by springs 33,34 respectively trapped between ferrules 35,36 and end caps 39,40.   Latching means 41 are provided to latch the receptacles together.

In the third example of connector assembly the housing structure is similar to that described in our German Patent Application P28 05 949.6 (8946) to which reference is hereby made.

As explained in more detail in German Patent Application P28 05 949.6, a pair of unstripped fibre optic cables 55 are assembled in a housing 56 including a clamping portion 57 with portions 58 of the cables stripped of the sheaths extending through apertures in a front end wall 59 of the housing portion 57.

The housing portion 57 is fixed by latches 59 in a channel section part 61 of a second housing portion 60 which has a tongue portion 71 supporting the optical fibres.   A plurality of axially extending rigid ribs 62 upstand from a rear part of an upper surface 63 of the tongue portion and a pad 64 of elastomeric material is located in a recess 65 in the tongue with the upper surface of the pad proud of surface 63.   The pad is formed with two grooves 65 aligned with channels defined by adjacent ribs.   An end portion 67 of each optical fibre stripped of the cladding extends for a predetermined distance along respective grooves. The elastomeric material contacting the exposed cores has a refractive index less than that of the cores and is coated, with an adhesive having a refractive index not less than the elastomer and not greater than the core.

As described in German Patent Application P28 05 949.6, a pair of connector assemblies can be clamped together by a sleeve with the surfaces 63 towards each other and the grooves in alignment so that the elastomers substantially completely enclose and precisely align exposed fibre cores. The dimensions are chosen so that the end faces of the cores are spaced apart by a distance not exceeding one and one half core diameters. The space between the end faces is advantageously filled with adhesive having a refractive index equal to that of the cores. The surface 63 may also be formed by a pad of elastomeric material, preferably of less resilience than the elastomeric pad 64.

Claims:

1. An optical fibre connector assembly comprising an optical fibre received in a housing passageway characterised in that, an end portion of the optical fibre core (21,67) from which the optical cladding (23) has been stripped is in contact with a portion of housing material (18,27,64) defining the passageway (19,28,66) having a refractive index of value less than the refractive index of the core (21,67).

2. An optical fibre connector assembly according to claim 1 characterised in that,.the said housing portion (18,27) has a refractive index of value substantially equal to the refractive index of the optical cladding (23).

3. An optical fibre connector assembly according to claim 1 or claim 2 characterised in that, the optical fibre core (21,67) is secured in the housing passageway (19,28,66) by an adhesive (24) having a refractive index of value substantially equal to the refractive index of the core (21,67).

4. An optical fibre connector assembly according to claim 1 or claim 2 characterised in that, the optical fibre core (67) is secured in the housing passageway (67) by an adhesive having a refractive index of value not greater than the refractive index of the core (67) and not less than the refractive index of the said portion of housing material (64).

5. An optical fibre connector assembly according to any one of claims 1 to 4 characterised in that, the housing passageway (14) has a section (17) of relatively large diameter enclosing an unstripped portion (25) of the optical fibre and a section of relatively small diameter (19) defined by the said housing portion (18) enclosing the end portion of the core.

6. An optical fibre connector assembly according to claim 5 when dependent from claim 3 characterised in that, the housing passageway (14) has a tapering section (16) communicating with the sections (17 and 19 respectively) of relatively large and small diameters in which tapering section the junction of the unstripped and stripped end portion is secured by the adhesive (24).

7. An optical fibre connector assembly according to any one of claims 1 to 6 characterised in that, the said portion of housing material is an insert (18,64) in another housing portion (12,56).

8. An optical fibre connector assembly according to claim 7 characterised in that, the insert (18,64) is elastomeric.

9. An optical fibre connector assembly according to claim 8 characterised in that, the cladding (23) and the insert (18,64) are made of silicone rubber and the optical fibre (21,67) is made of fused silica.

10. An optical fibre connector assembly according to claim 7 characterised in that, the insert (64) comprises two elastomer pads (64) each having a groove (66) receiving axially an optical fibre end portion (67) from which the optical cladding has been stripped, the pads (64) being abutted together with the grooves (66) superimposed on each other to define the said passageway (66) with the end portions axially aligned in spaced apart relation and surrounded by the material (64) defining each groove.

11. A method of terminating an optical fibre characterised by stripping the optical cladding (23) from an end portion of the optical fibre (11) and inserting the end portion of the optical fibre (11) in a housing passageway defined by a part of the housing (18,64) having a refractive index of value less than the refractive index of the fibre core (21,67).

FIG.1.

FIG.2.

FIG.3.

FIG.4.